# EUROPÄISCHE PATENTANMELDUNG

(11) **EP 4 238 627 A1**
(43) Veröffentlichungstag der Anmeldung: **06.09.2023**
(21) Anmeldenummer: 23154854.6
(22) Anmeldetag: 03.02.2023
(51) Int. Cl.: B01D 29/11, B01D 29/52, B01D 29/72, B01D 35/027, B01D 35/12

(54) **ABSCHEIDEVORRICHTUNG**

(30) Priorität: 01.03.2022 DE 102022000736
(71) Anmelder: Hydac Filtertechnik GmbH, 66280 Sulzbach/Saar (DE)
(72) Erfinder: Kleemann, Daniel, 57515 Alsting (FR); Nenno, Alexander, 66646 Marpingen (DE); Schneider, André Michael, 66111 Saarbrücken (DE)
(74) Vertreter: Bartels und Partner, Patentanwälte

(57) **Zusammenfassung**

2. Abscheidevorrichtung mit einem Behälter (10) und einer in diesem Behälter (10) angeordneten Filtereinrichtung (12), die einen über einen Zulauf (14) zugeführten Unfiltratstrom von Teilchen abreinigt, die unter dem Einfluss der Schwerkraft sich als Sediment (16) im Behälter (10) bodenseitig absetzen und mit einem Ablauf (18) zum Abführen eines derart abgereinigten Fluidstroms aus dem Behälter (10), wobei mittels einer oszillierenden Abreinigungseinrichtung (20) etwaig an der Filtereinrichtung (12) bedingt durch die Filtration verbleibende Teilchen entfernbar sind.

## Beschreibung

Die Erfindung betrifft eine Abscheidevorrichtung mit einem Behälter und einer in diesem Behälter angeordneten Filtereinrichtung, die einen über einen Zulauf zugeführten Unfiltratstrom von Teilchen abreinigt, die unter dem Einfluss der Schwerkraft sich als Sediment im Behälter bodenseitig absetzen und mit einem Ablauf zum Abführen eines derart abgereinigten Fluidstroms aus dem Behälter.

Durch die nachveröffentlichte DE 10 2021 000 392 ist ein Verfahren nebst Vorrichtung zum Auftrennen eines partikuläre Verunreinigungen aufweisenden Fluids in die Bestandteile Verunreinigungen und Fluid bekannt mit zumindest den folgenden Verfahrensschritten:
- Zuführen des Fluids als Unfiltrat,
- Abscheiden von Partikeln vorgebbarer Größe mittels Sedimentation,
- Abscheiden von demgegenüber kleineren Partikeln mittels Filtration, und
- Abführen des Fluids als Filtrat.

Die zugehörige Vorrichtung weist einen Aufnahmebehälter auf mit einem Zulauf für Unfiltrat und mit einem Ablauf für Filtrat, wobei der Aufnahmebehälter in zwei Funktionsbereiche unterteilt ist, von denen der eine der Sedimentation und der andere der Filtration dient, zwecks Abscheiden von Partikeln aus dem Unfiltrat.

Durch WO 2015/158335 A2 ist ein Verfahren nebst Vorrichtung zum Erfassen, Trennen und Wiederaufbereiten von feststoffbelasteten Kühlschmierstoffen aus einer Bearbeitungsvorrichtung bekannt, wobei ein Medienstrom aus Gasen, Flüssigkeiten und Feststoffen gemeinsam in einem Bearbeitungsraum einer Bearbeitungsvorrichtung in einer Abführöffnung erfasst wird und gemeinsam durch einen Abführkanal abgeführt wird, wobei in einer ersten Abscheidestufe, Gase von den Flüssigkeiten und Feststoffen getrennt werden und in einer zweiten Stufe mittels eines Vorfilters und eines Absetzbeckens die Flüssigkeit von den Feststoffen getrennt werden, die sich bodenseitig durch Sedimentation am Absetzbecken ablagern.

Bei den bekannten Lösungen kommt es mit zunehmender Partikelbeladung zu einem Zusetzen respektive Verblocken des jeweiligen Filters einer Filtereinrichtung, der dann gegen ein Neuelement zu tauschen ist bzw. sofern der Vorfilter aus einem Drahtgitter oder ähnlichem besteht händisch abzureinigen ist, wofür die gesamte Abscheidevorrichtung stillzusetzen ist, was gegebenenfalls zum Stillsetzen der Gesamtanlage führt, die der Abscheidevorrichtung vorgeschaltet ihren Unfiltratstrom an die Abscheidevorrichtung zwecks Abreinigen zuführt.

Ausgehend von diesem Stand der Technik liegt der Erfindung die Aufgabe zugrunde, die bekannten Lösungen dahingehend weiter zu verbessern, dass in funktionssicherer Weise ein weitgehend stillstandsfreies Abreinigen von Unfiltratströmen möglich ist.

Eine dahingehende Aufgabe löst eine Abscheidevorrichtung mit den Merkmalen des Patentanspruches 1 in seiner Gesamtheit.

Dadurch, dass gemäß dem kennzeichnenden Teil des Patentanspruches 1 mittels einer oszillierenden Abreinigungseinrichtung etwaig an der Filtereinrichtung bedingt durch die Filtration verbleibende Teilchen entfernbar sind, kann auch noch im Rahmen einer fortwährenden Filtration, die sich auf der Filtereinrichtung abgesetzte Partikelverschmutzung in oszillierender Weise entfernt werden, wobei die dahingehenden Teilchen als Partikelverschmutzung dann durch Sedimentation sich am Behälterboden absetzen. Die Schwingungs- oder Oszillator-Frequenz für die Abreinigungseinrichtung lässt sich dabei in vorgebbarem Rahmen einstellen, so dass in Abhängigkeit von der Verschmutzungsart sowie dem Grad der Verschmutzung eine zielgerichtete Abreinigung der Partikelverschmutzung auf die Unfiltrat- oder Sedimentseite der Filtereinrichtung durchgeführt werden kann, ohne dabei zwingend die Filtration unterbrechen zu müssen.

Im Bedarfsfall kann aber auch die Filtration unterbrochen werden, was notwendig werden kann, wenn durch die Schwingungs- oder Ultraschallanregung der sich auf der Filtereinrichtung absetzende Filterkuchen mit der Partikelverschmutzung in zu kleine Partikelgrößen aufbricht und dann dergestalt ungewollt auf die Reinseite der Vorrichtung gelangen kann.

Bei einer bevorzugten Ausführungsform der erfindungsgemäßen Abscheidevorrichtung ist vorgesehen, dass ein Filterelement der Filtereinrichtung für eine Filtration von außen nach innen durchströmt ist und dass mittels einer Saugeinrichtung über eine als Ablauf dienende Saugleitung, die auf die Filtratseite des Filterelementes geführt ist, der abgereingte Fluidstrom aus der Filtereinrichtung gelangt.

Die erfindungsgemäße Abscheidevorrichtung soll insbesondere für Gleitschleifanlagen zum Einsatz kommen mit Schmutzproduktionsraten von bis zu 1,5 kg/h, wobei es sich hierbei zumeist um keramischen Feinstabrieb handelt mit einem geringen metallischen Anteil, der als partikuläre Verschmutzung auftritt. Bei der Flüssigkeit zur Aufnahme und zum Transport der Partikelverschmutzung handelt es sich meist um Wasser mit einem Zusatz von 1 bis 4% sogenanntem Compound als Korrosionsschutz. Die dahingehende wässrige Flüssigkeit mit der Partikelverschmutzung gelangt dann als Unfiltratstrom mit sehr geringem Volumenstromeintrag über den Ein- oder Zulauf des Behälters. Über die mindestens eine Saugleitung, die vorzugsweise mit der Systempumpe der Gleitschleifanlage verbunden ist, wird die schmutzbeladene Flüssigkeit durch das Filterelement der Filtereinrichtung entweder bis zu einem vorgebbaren bestimmten Differenzdruck oder zeitgesteuert angesaugt, bevor danach oder zeitgleich eine Abreinigung erfolgt. Dergestalt lässt sich das abgereinigte Fluid als Filtratstrom erneut der Gleitschleifanlage für deren Betrieb zuführen.

Bei einer weiteren bevorzugten Ausführungsform der erfindungsgemäßen Abscheidevorrichtung ist vorgesehen, dass die oszilierende Abreinigungseinrichtung innerhalb und/oder außerhalb eines Filterelements der Filtereinrichtung angeordnet ist. Während das Filterelement der Filtereinrichtung für eine Filtration von außen nach innen durchströmt wird, bleibt die "nasse" Partikelverschmutzung am Außenumfang des Filtermediums des jeweiligen Filterelementes anhaften und durch das Aufbringen einer Schwingung oder einer Oszillation mittels der Abreinigungseinrichtung fällt der auf der Außenseite am Filterelement anhaftende Partikelschmutz von dem Filterelement ab und sedimentiert in Richtung des Bodens des Aufnahmebehälters. Je nach Ausführungsform der Abscheidevorrichtung kann dabei die Filtereinrichtung mit dem jeweiligen Filterelement mittels der Abreinigungseinrichtung in eine oszillierende oder schwingende Bewegung versetzt werden und/oder Fluid, das benachbart zu der Filtereinrichtung ist, beispielsweise im Rahmen der Durchströmung der Filtereinrichtung während eines Filtrationsprozesses, wird in Schwingung versetzt und nimmt indirekt die Abreinigung an der Filtervorrichtung vor. Dabei ist vorzugsweise vorgesehen, auch im Rahmen des störungsfreien Betriebes der Saugeinrichtung, dass die Filtereinrichtung mit dem jeweils zugehörigen Filterelement unterhalb eines Fluidlevels im Behälter in jedem Betriebszustand während der Filtration und/oder Sedimentation angeordnet sind.

Bei einer besonders bevorzugten Ausführungsform der erfindungsgemäßen Abscheidevorrichtung ist vorgesehen, dass die Abreinigungseinrichtung aus einem Ultraschall-Schwinger, insbesondere in Stabform gebildet ist, der innerhalb des Filterelementes in dieses eingesetzt ist. Ein dahingehender Ultraschall-Stabschwinger bringt insbesondere das benachbarte Fluid am Filtermedium des Filterelementes, das vorzugsweise plissiert in Filterfaltenform vorliegt in oszillierende Schwingung, so dass indirekt über das Fluid die Schmutzpartikel auf der Außenumfangsseite des Filterelementes aktiv "abgeklopft" werden und auf die Unfiltratseite des Behälters sedimentieren können. Das derart abgereinigte Filtermedium steht dann für die weitere Filtration des Unfiltratstromes ungehindert zur Verfügung, wobei eine gewisse partikuläre Verschmutzung des Filterelementes dem Filtrationsprozess nicht unmittelbar schadet, so dass zeitlich parallel sowohl die Abscheidung als auch die Filtration mit einem einzelnen Filterelement vorgenommen werden kann.

Die Realisierung der Abreinigungseinrichtung als Ultraschall-Schwinger in Stabform lässt sich in platzsparender Weise, im Inneren des Filterelementes der Filtereinrichtung aufnehmen. Weitere mögliche Abreinigungseinrichtungen sind dadurch gebildet, dass eine Schwingungseinrichtung, insbesondere in Form mehrerer Vibrationsmotoren, vorhanden ist, die vorzugsweise in Hinter- oder Nebeneinanderanordnung auf das Filterelement einwirken, wobei vorzugsweise das Filterelement dann auf die dahingehende Schwingungseinrichtung mit seiner Unterseite aufgesetzt ist. Alternativ kann die Abreinigungseinrichtung auch aus einer fluiddurchlässigen Rüttelplatte gebildet sein, die von der Schwingungseinrichtung, insbesondere in Form eines Vibrationsmotors, angetrieben, auf einer Auflageseite das Filterelement trägt und im Betrieb durch Rütteln die Filterfalten des Filtermediums abreinigt. Dergestalt greift die Abreinigungseinrichtung direkt am Filterelement der Filtereinrichtung an.

Als besonders bevorzugt hat sich eine ovale Querschnittsform für das Filterelement ergeben, um möglichst viele horizontale Falten für das Filtermedium zu ermöglichen, von welchen aus durch Ultraschall abgelöster Schmutz nach unten in den Behälter behinderungsfrei sedimentieren kann. In Näherung zu der idealen Ovalform ist vorzugsweise vorgesehen, dass die Filtermattenbahn des Filterelementes zwei parallel zueinander verlaufende Mattenseiten aufweist, die randseitig über eine halbkreisförmige Mattenseite jeweils bis auf eine Verbindungsnaht mit ihren Filterfalten einstückig ineinander übergehen.

Um die Abreinigung zu verbessern, ist eine Haupt-Filterlage des Filterelementes aus einem Polyester-Trägermaterial gebildet, welches membranartig vorzugsweise mit einer Beschichtung aus PTFE versehen ist. Zur Stützung des Filtermediums kann abströmseitig ein Stützgewebe, beispielsweise in Form eines Metall- oder Kunststoff-Drahtgewebes, eingebracht sein. Auch können Membrane selbst eigenständiger Bestandteil im Lagenaufbau des Filterelementes sein.

Bei einer besonders bevorzugten Ausführungsform der erfindungsgemäßen Abscheidevorrichtung ist vorgesehen, dass für einen kontinuierlichen Betrieb mindestens zwei Filterelemente der Filtereinrichtung eingesetzt sind, von denen ein Filterelement abwechselnd für die Filtration oder Abreinigung und das jeweils andere Element abwechselnd für die Abreinigung oder Filtration der zugehörigen Filtermattenbahn eingesetzt ist.

Als besonders vorteilhaft hat sich für den vorstehend genannten Einsatz ein Filterelement erwiesen, das zwischen zwei Endkappen eine Filtermattenbahn aufnimmt, die einen Filterhohlraum umfasst, in dem eine Schwingungseinrichtung, insbesondere in Form eines Ultraschall-Schwingers, als integraler Bestandteil des Filterelementes aufgenommen ist. Dergestalt ist eine handelbare Baueinheit geschaffen, die auch in bestehende Filter- und Abscheidevorrichtungen nachträglich eingesetzt werden kann, beispielsweise im Rahmen von Wartungsarbeiten.

Im Folgenden wird die erfindungsgemäße Abscheidevorrichtung anhand von stark vereinfachten Prinzipdarstellungen im Querschnitt bzw. in perspektivischer Ansicht gesehen näher erläutert. Dabei zeigen die
- Figuren 1 bis 3: verschiedene Ausführungsformen einer Abscheidevorrichtung; und
- Figur 4: ein "ovales" Filterelement für die Verwendung in eine Abscheidevorrichtung nach einer der Figuren 1 bis 3.

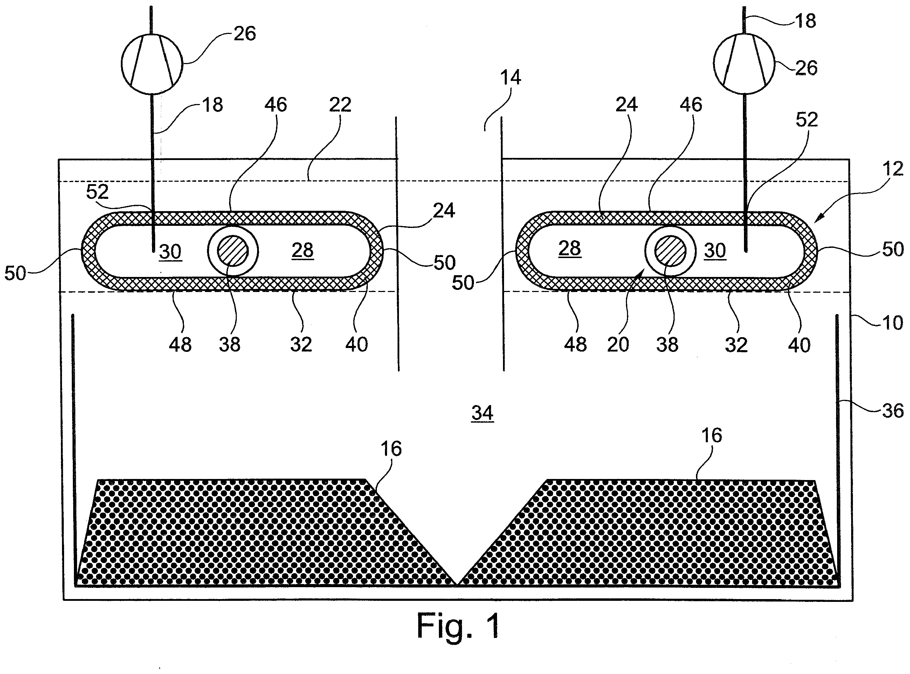

Figur 1 zeigt in prinzipiellem Aufbau die wesentlichen Komponenten einer Abscheidevorrichtung mit einem Behälter 10 und einer in diesem Behälter 10 angeordneten, als Ganzes mit 12 bezeichneten Filtereinrichtung, die einen über einen Zulauf 14 auf der Oberseite des Behälters 10 zugeführten Unfiltratstrom von Teilchen respektive Partikelverschmutzung abreinigt, die unter dem Einfluss der Schwerkraft sich als Sediment 16 im Behälter 10 bodenseitig absetzen. Ferner ist ein Ablauf 18 zum Abführen eines derart abgereinigten Fluidstroms aus dem Behälter 10 vorgesehen. Zum Abreinigen der Filtereinrichtung 12 wird diese mittels einer als Ganzes mit 20 bezeichneten Abreinigungseinrichtung zumindest teilweise in Schwingung respektive in Oszillation versetzt, was im Folgenden noch näher erläutert werden wird.

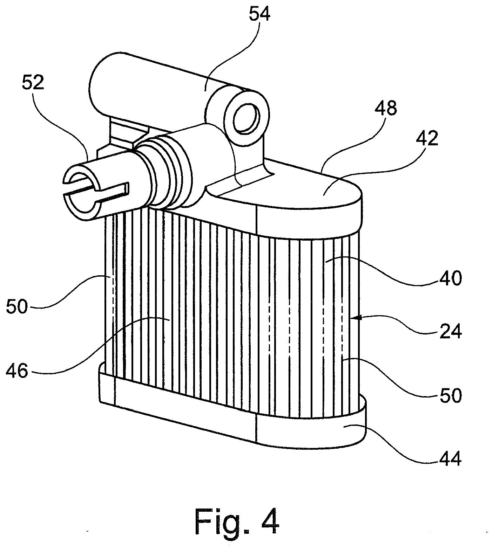

Wie sich des Weiteren aus der Figur 1 ergibt, ist eine punktierte Linie als möglicher und üblicher Flüssigkeitsstand 22 während des Betriebs angegeben. Bei der in Figur 1 gezeigten Lösung weist die Filtereinrichtung 12 zwei Filterelemente 24 auf, die jeweils in der Figur 4 detailliert dargestellt sind. Die Filtereinrichtung 12 und mithin das jeweilige Filterelement 24 wird für eine Filtration von außen nach innen von dem Unfiltratstrom durchströmt, wobei mittels einer Saugeinrichtung 26, beispielsweise in Form einer Saug- oder Vakuumpumpe, der abgereinigte Fluidstrom aus der Filtereinrichtung 12 mit den Filterelementen 24 gelangt, wobei eine zugehörige, als Ablauf 18 dienende Saugleitung mit ihrem freien Ende jeweils auf die Filtratseite 28 des jeweiligen Filterelementes 24 geführt ist, die gleichgesetzt werden kann mit einem Filterhohlraum 30 im Inneren des jeweiligen Filterelementes 24. Die Saugeinrichtung 26 mit ihrer jeweiligen volumetrischen Pumpe kann Bestandteil einer Maschinenvorrichtung sein, wie beispielsweise einer Gleitschleifanlage, für deren Betrieb abgereinigtes Fluid über den Ablauf 18 nebst Saugeinrichtung 26 zugeführt wird. Es besteht aber auch die Möglichkeit die Abscheidevorrichtung selbst mit dahingehenden Saug- oder Betriebspumpen im Bedarfsfall zu versehen. Die nicht näher dargestellte Gleitschleifanlage ist jedenfalls insoweit mit ihren fluidführenden Komponenten an den Ausgang der jeweiligen Saugeinrichtung 26 angeschlossen.

Das jeweilige Filterelement 24 ist in Blickrichtung auf die Figur 1 gesehen mit seinem unteren Ende auf einer perforierten Stützfläche 32 aufgelegt und dergestalt im oberen Bereich des Behälters 10 in der jeweiligen Filterposition lagefixiert. Das jeweilige Filterelement 24 reinigt das über den Zulauf 14 eingebrachte Unfiltrat 34 im Behälter 10 ab und die abgereinigten Partikel oder Teilchen gelangen schwerkraftbedingt nach Abscheiden durch das Filterelement 24 als Sediment 16 zur Bodenseite des Behälters 10, wobei unter jedem Filterelement 24 in der Art einer Aufschüttung bereits abgelagertes Sediment 16 dargestellt ist. Um das Sediment 16 aus dem Behälter 10 abtransportieren zu können, kann innerhalb des Behälters 10 eine Schmutzwanne 36 angeordnet sein, die nach Entfernen der Filtereinrichtung 12 nebst der Deckelseite des Behälters 10 aus selbigem entnommen und abgereinigt werden kann. Anschließend wird die Schmutzwanne 36 für eine erneute Sedimentaufnahme in umgekehrter Abfolge in den Behälter 10 eingesetzt. Um die Sedimentenbildung im Behälter 10 nicht zu beeinträchtigen, ist die Flüssigkeit im überwiegenden Teil des Behälters 10 in Ruhe gehalten und ein turbulenter Flüssigkeitseintrag über den Zulauf 14 oder eine Entnahme über das jeweilige Filterelement 24 erfolgt nur im oberen Drittel des Behälters 10.

Die Abreinigungseinrichtung 20 weist für jedes Filterelement 24 einen Ultraschall-Schwinger 38 auf, insbesondere in Stabform, der in den Filterhohlraum 30 eingesetzt ist. Bei Anregen des Ultraschall-Schwingers 38, beispielsweise durch Anschalten eines zugehörigen Betätigungsmotors (nicht dargestellt) mittels Strom, wird die angrenzende Flüssigkeit innerhalb des Filterhohlraums 30 in Schwingung versetzt und mithin auch das Filtermedium 40, so dass außen anhaftende Partikel am Filterelement 24 nach unten sedimentierend abfallen. Insbesondere gelangen dergestalt Verschmutzungspartikel über die Stützfläche 32 auf die Sedimentseite des Behälters 10.

Ein Filterelement 24 als Ganzes ist dabei in perspektivischer Darstellung in Figur 4 gezeigt. Dabei erstreckt sich das plissierte Filtermedium 40 zwischen zwei Endkappen 42, 44. Anstelle eines plissierten Aufbaus für das Filtermedium 40 ist auch ein glatter bandwickelförmiger Aufbau möglich, der jedoch nicht so vorteilhaft ist wie die Filterfalten-Lösung. Als Filtermedium 40 kann primär ein 1- oder 2-lagiges, sogenanntes Mesh-Pack verwendet werden; sprich also ein 1- oder 2- lagiges Filtermedium 40. Besonders bevorzugt besteht die Haupt-Filterlage aus einem Polyester-Trägermaterial, welches unter Bildung einer Membran, vorzugsweise mit PTFE (Polytetrafluorethylen) beschichtet ist, wobei die Beschichtung vorzugsweise auf der Außenseite respektive der Schmutzseite 34 des Filtermediums 40 angeordnet ist. Die derart aufgebaute Membran kann auf die benötigte Filtrationsfeinheit abgestimmt werden. Ferner ist das Filtermedium 40 auf übliche und nicht näher dargestellte Weise abstromseitig, also auf der Filtratseite 28 mit einem perforierten Stützkörper versehen, beispielsweise gebildet aus einem Metall- oder Kunststoff-Drahtgewebe. Die beiden Endkappen 42, 44 lassen sich mit den freien Endseiten des Filtermediums 40 fest verbinden, beispielsweise unter Einsatz eines Laserschweiß- oder Spiegelschweiß-Verfahrens oder mittels Kleben. Der in Figur 4 gezeigte Filter bildet keine ideale Ovalform aus, verfügt aber gegenüberliegend über zwei parallel zueinander verlaufende Mattenseiten 46, 48, die randseitig über eine halbkreisförmige Mattenseite 50 jeweils ineinander übergehen. Die annähernd ovale Form des Filterelementes 24 hat den Vorteil, um dergestalt gegenüber einer zylindrischen Filteranordnung möglichst viele horizontal verlaufende Falten zu generieren, von welchen aus verbessert der durch Ultraschall abgelöste Schmutz nach unten hin sedimentieren kann.

Wie sich des Weiteren aus der Figur 4 ergibt, weist die obere Endkappe 42 einen Fluidanschluss 52 auf, zwecks Anschließen der Saugleitung für den Ablauf 18. Des Weiteren ist auf der Oberseite der oberen Endkappe 42 eine Aufnahme 54 angeordnet, über die der elektrische Anschluss an einen Erregermotor (nicht dargestellt) führt, der in der Aufnahme 54 angeordnet den Ultraschall-Schwinger 38 betätigen kann. Alternativ besteht die Möglichkeit, in die Aufnahme 54 eine Batterie für den elektrischen Erregermotor zu integrieren, die gegebenenfalls auch extern von außen nachgeladen werden kann.

Anstelle der Beschichtung mittels PTFE können alternativ oder zusätzlich auch noch die folgenden Beschichtungen zum Einsatz kommen, die für die zuäußerst liegende Haupt-Filterlage eine Art Oberflächencharakteristik ausbilden: Ethylen (E), Propylen (P), Vinylfluorid (VF1), Vinylidenefluorid (VDF oder VDF2), Tetrafluorethylen (TFE), Hexfluoropropylen (HFP), Perfluoropropylvinylether (PPVE), Perfluoromethylvinylether (PMVE), Chlorotrifluoroethylen (CTFE), Polyvinylfluorid (PVF), Polyvinylidenfluorid (PVDF), Polychlorotrifluoroethylen ( PCTFE), Perfluoroalkoxypolymer (PFA), Fluoriertes Ethylen-Propylen (FEP), Polyethylentetrafluoroethylen (ETFE), Polyethylenchlorotrifluoroethylen (ECTFE), Perfluoriniertes Elastomer [Perfluoroelastomer] (FFPM/FFKM), Fluorocarbon [Chlorotrifluororethylenvinylidenfluorid] (FPM/FKM), Perfluoropolyether (PFPE), Perfluorosulfonische Säure (PFSA).

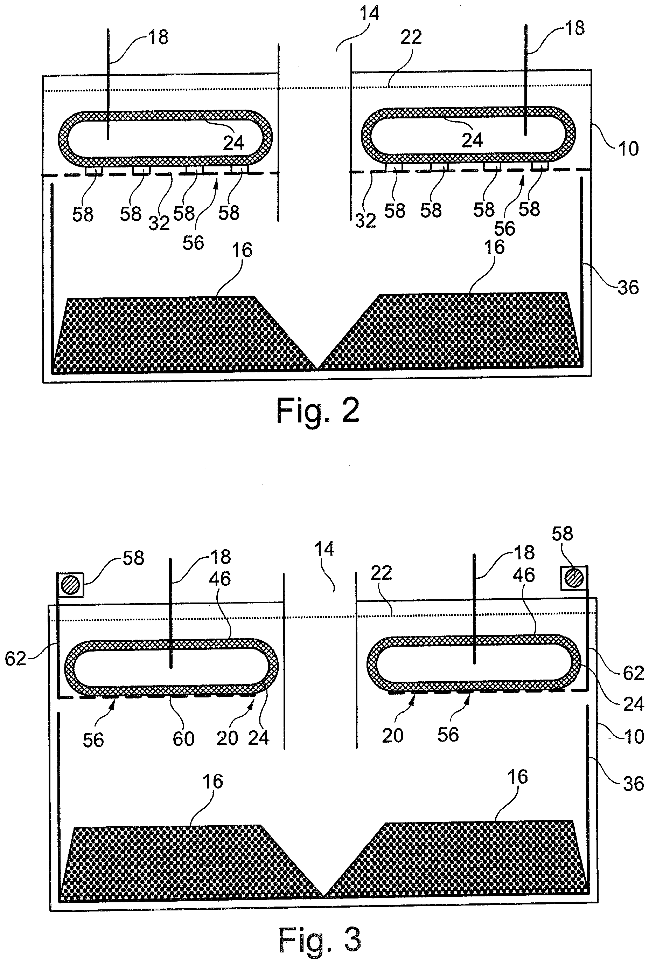

Die Ausführungsbeispiele nach den Figuren 2 und 3 werden insofern nur noch erläutert, als sie sich wesentlich von dem vorangehenden Ausführungsbeispiel nach den Figuren 1 und 4 unterscheiden.

Bei der Ausführungsform nach der Figur 2 besteht die Abreinigungseinrichtung 20 aus mindestens einer Schwingungseinrichtung 56, insbesondere in Form einer Vielzahl einzelner voneinander beabstandeter Vibrationsmotoren 58. Auch diese sind elektrisch betätigbar und können beispielsweise aus einzelnen Piezoelementen bestehen. Die Motoren 58 können sich sowohl in Querrichtung als auch in Längsrichtung voneinander beabstandet zwischen der unteren Mattenseite 48 des zugehörigen Filterelementes 24 sowie auf der Oberseite der perforierten Stützfläche 32 sich erstrecken. Es besteht aber auch die Möglichkeit die Motoren 58 als Längsstäbe ausgebildet, entlang der gesamten Mattenbahnhöhe zwischen den beiden Endkappen 42, 44 verteilt anzuordnen. Bei Betätigen der Vibrationsmotoren 58 respektive der Schwingungseinrichtung 56, werden insbesondere die Filterfalten der unteren Mattenseite 48 in Bewegung versetzt und schütteln dergestalt die Elementverschmutzung in Richtung des Sedimentbettes 16 des Behälters 10 ab.

Bei der Ausführungsform nach der Figur 3 besteht die Abreinigungseinrichtung 20 aus einer fluiddurchlässigen Rüttelplatte 60 vergleichbar der perforierten Stützfläche 32, wobei die Rüttelplatte 60 über einen Winkel 62 an die Schwingungseinrichtung 56 angelenkt ist, die ebenfalls mittels eines Vibrationsmotors 58 über den Winkel 62 und die Rüttelplatte 60 das zugehörige Filterelement 24 in oszillierende Bewegung versetzt zwecks Abschütteln der während der Filtration im Filtermedium 40 aufgenommenen Partikelverschmutzung.

Im Rahmen eines quasi kontinuierlichen Betriebes können nach dem Erreichen der jeweiligen Verschmutzungsgrenze, die Vibrationsmotoren 58 auch nur für kurze Zeit aktiviert werden und die sich hieraus ergebende Vibrationsenergie wird direkt an die Filterfalten des Filtermediums 40 weitergegeben, so dass zuvor am Filtermedium 40 abgeschiedene Schmutz abgelöst wird und sedimentiert wird. Die eingebrachte Vibrationsenergie führt auch zum grobkörnigen und schollenartigen Abplatzen eines etwaigen Filterkuchens auf der Außenseite des Filtermediums 40 und dieses wiederum dazu, dass die groben Partikel respektive Schollen entsprechend schnell sedimentieren können; sogar bei weiterhin aktivem Filtrationsbetrieb und bei nach oben gerichteter Strömung in Richtung der Saugeinrichtung 26. Ungünstiger sind die Filterfalten, die auf der oberen Mattenseite 46 zu Liegen kommen. Hier sind die Möglichkeiten einer Schmutzsedimentation deutlich eingeschränkt, weshalb dieser obere Bereich erfahrungsgemäß nach einer bestimmten Zeit aufgrund der Verblockung der Filterfalten nicht mehr im Filtereingriff ist. Für die grundsätzliche Funktionsweise der Abscheidevorrichtung ist dies allerdings nicht von Relevanz.

Bei der Ausführungsform nach der Figur 3 ist das jeweilige Filterelement 24 auf der gitterartigen Rüttelplatte 60 aufliegend unter Einsatz des Winkels 62 mit dem nach außen, außerhalb des Behälters 10 geführten Vibrationsmotor 58 verbunden. Insoweit leitet dann das Gittergestell 60, 62 die Vibrationsenergie an die Filterfalten des Filtermediums 40 weiter. Auf der Rüttelplatte 60 selbst kann eine Überträgerstruktur, beispielsweise aus NBR aufgebracht sein. Jedenfalls kommt bei der dahingehenden Lösung der Vibrationsmotor 58 nicht mit der Flüssigkeit im Behälter 10 in Berührung, so dass auf eine weitgehende Abdichtung von Motorbestandteilen verzichtet werden kann. Je nach gewünschter Ausgestaltung können auch mehrere, verschiedene Abreinigungseinrichtungen 20 nach den Figuren 1 bis 3 miteinander kombiniert werden.

Wie die Darstellungen nach den Figuren 1 bis 3 belegen, kann nicht ausgeschlossen werden, dass trotz des Abschüttelns der Partikelverschmutzung aus den Filterfalten des jeweiligen Filterelementes 24 schwerkraftbedingt die Verschmutzung erneut auf der oberen Mattenseite 46 mit seinen einzelnen Filterfalten zu liegen kommt. Um dem zu begegnen, kann in diskreten zeitlichen Abständen vorgesehen sein mittels einer nicht näher dargestellten Wendeeinrichtung, die beispielsweise an mindestens einer Endkappe 42, 44 des jeweiligen Filterelementes 24 angreift, dieses derart um 180° zu wenden, dass die bisherige obere Mattenseite 46 nach unten zu liegen kommt und die untere zweite Mattenseite 48 nach oben gelangt. Bei der anschließenden Oszillierbewegung von Filterelement 24 und/oder von benachbartem Fluid werden dann die noch verbleibenden Verunreinigungen auf der jeweils zuunterst liegenden Mattenseite 46 nach unten in Richtung der abgelagerten Sedimente 16 abgeschüttelt.

Wenn man die vorstehend aufgezeigte Wendeeinrichtung einsparen möchte, besteht bei einer weiter nicht dargestellten Ausführungsform auch die Möglichkeit, statt der in den Figuren 1 bis 3 gezeigten Horizontalanordnung die Filterelemente 24 in Vertikalrichtung in den Behälter 10 einzusetzen, so dass nach allen Seiten gleichermaßen die Verschmutzung abfallen kann.

Ferner besteht die Möglichkeit bei einer weiteren nicht dargestellten Ausführungsform ein oder mehrere Filterelemente 24 in horizontaler Anordnung unter einer Rüttelplatte anzuordnen, die auf ihrer Oberseite einen Vibrationsmotor trägt und die oszillierenden Bewegungen des Vibrationsmotors werden dann über die Rüttel- oder Halteplatte auf das daran jeweils befestigte Filterelement 24 übertragen. Während bei den gezeigten Ausführungsbeispielen nach den Figuren 1 bis 3 die Oszillatoreinrichtung 12 zusammen mit dem jeweiligen Filterelement 24 innerhalb des Behälters 10 entsprechend festgelegt ist, besteht bei einem weiteren nicht näher dargestellten Ausführungsbeispiel auch die Möglichkeit die Oszillatoreinrichtung 12 nebst jeweiligem Filterelement 24 über eine Ständerkonstruktion mit Längs- und Querholmen auf einem Boden auf dem der Behälter 10 sitzt aufzuständern, so dass eine Art Nachrüstsatz für bereits bestehende Anlagen geschaffen ist. Die erfindungsgemäße Abscheidevorrichtung kann auch entsprechend angepasst der Filtration in sehr großen Anlagen dienen mit ausgesprochen hohen Schmutzproduktionsraten.

## Patentansprüche

1. Abscheidevorrichtung mit einem Behälter (10) und einer in diesem Behälter (10) angeordneten Filtereinrichtung (12), die einen über einen Zulauf (14) zugeführten Unfiltratstrom von Teilchen abreinigt, die unter dem Einfluss der Schwerkraft sich als Sediment (16) im Behälter (10) bodenseitig absetzen und mit einem Ablauf (18) zum Abführen eines derart abgereinigten Fluidstroms aus dem Behälter (10), **dadurch gekennzeichnet, dass** mittels einer oszillierenden Abreinigungseinrichtung (20) etwaig an der Filtereinrichtung (12) bedingt durch die Filtration verbleibende Teilchen entfernbar sind.

2. Abscheidevorrichtung nach Anspruch 1, **dadurch gekennzeichnet, dass** ein Filterelement (24) der Filtereinrichtung (12) für eine Filtration von außen nach innen durchströmt ist und dass mittels einer Saugeinrichtung (26) über eine als Ablauf (18) dienende Saugleitung, die auf die Filtratseite (28) des Filterelementes (24) geführt ist, der abgereingte Fluidstrom aus der Filtereinrichtung (12) gelangt.

3. Abscheidevorrichtung nach Anspruch 1 oder 2, **dadurch gekennzeichnet, dass** die die Filtereinrichtung (12) in Schwingung versetzende Abreinigungseinrichtung (20) innerhalb und/oder außerhalb eines Filterelements (24) der Filtereinrichtung (12) angeordnet ist.

4. Abscheidevorrichtung nach einem der vorstehenden Ansprüche, **dadurch gekennzeichnet, dass** die Abreinigungseinrichtung (20) aus einem Ultraschall-Schwinger (38), insbesondere in Stabform gebildet ist, der innerhalb des Filterelementes (24) in dieses eingesetzt ist.

5. Abscheidevorrichtung nach einem der vorstehenden Ansprüche, **dadurch gekennzeichnet, dass** die Abreinigungseinrichtung (20) aus mindestens einer Schwingungseinrichtung (56), insbesondere in Form mindestens eines Vibrationsmotors (58) gebildet ist, die auf das Filterelement (24) einwirkt, in dem vorzugsweise das Filterelement (24) auf die Schwingungseinrichtung (56) aufgesetzt ist.

6. Abscheidevorrichtung nach einem der vorstehenden Ansprüche, **dadurch gekennzeichnet, dass** die Abreinigungseinrichtung (20) aus einer fluiddurchlässigen Rüttelplatte (60) gebildet ist, die von einer Schwingungseinrichtung (56), insbesondere in Form eines Vibrationsmotors (58) angetrieben, auf einer Auflageseite das Filterelement (24) trägt.

7. Abscheidevorrichtung nach einem der vorstehenden Ansprüche, **dadurch gekennzeichnet, dass** das Filterelement (24) eine Filtermattenbahn aufweist, die vorzugsweise plissiert ist, mit zwei parallel zueinander verlaufenden Mattenseiten (46, 48), die randseitig über einer halbkreisförmige Mattenseite (50) jeweils ineinander übergehen.

8. Abscheidevorrichtung nach einem der vorstehenden Ansprüche, **dadurch gekennzeichnet, dass** die Filtermattenbahn eine Beschichtung aufweist, die der Unfiltratseite (34) zugewandt ist und die vorzugsweise aus PTFE besteht.

9. Abscheidevorrichtung nach einem der vorstehenden Ansprüche, **dadurch gekennzeichnet, dass** für einen kontinuierlichen Betrieb mindestens zwei Filterelemente (24) der Filtereinrichtung (12) eingesetzt sind, von denen ein Filterelement (24) abwechselnd für die Filtration oder Abreinigung und das jeweils andere Element (24) abwechselnd für die Abreinigung oder Filtration der zugehörigen Filtermattenbahn eingesetzt ist.

10. Filterelement, insbesondere vorgesehen für eine Abscheidevorrichtung nach einem der vorstehenden Ansprüche, **dadurch gekennzeichnet, dass** zwischen zwei Endkappen (42, 44) sich eine Filtermattenbahn erstreckt, die einen Filterhohlraum (30) umfasst, in dem eine Schwingungseinrichtung, insbesondere in Form eines Ultraschall-Schwingers (38), als integraler Bestandteil des Filterelementes (24) aufgenommen ist.
